(19) Europäisches Patentamt
European Patent Office
Office européen des brevets

(11) **EP 3 993 090 A1**

(12) **EUROPEAN PATENT APPLICATION**
published in accordance with Art. 153(4) EPC

(43) Date of publication:
**04.05.2022 Bulletin 2022/18**

(21) Application number: **20832955.7**

(22) Date of filing: **24.04.2020**

(51) International Patent Classification (IPC):
*H01M 4/13* (2010.01)      *B32B 15/08* (2006.01)
*B32B 15/082* (2006.01)      *B32B 15/088* (2006.01)
*H01M 4/02* (2006.01)      *H01M 10/04* (2006.01)
*H01M 50/409* (2021.01)

(52) Cooperative Patent Classification (CPC):
**B32B 15/08; B32B 15/082; B32B 15/088;
H01M 4/02; H01M 4/13; H01M 10/04;
H01M 10/058;** Y02E 60/10; Y02P 70/50

(86) International application number:
**PCT/JP2020/017626**

(87) International publication number:
**WO 2020/261742 (30.12.2020 Gazette 2020/53)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.06.2019 JP 2019118390**

(71) Applicant: **Panasonic Intellectual Property
Management Co., Ltd.
Osaka-shi, Osaka 540-6207 (JP)**

(72) Inventor: **TOKUDA Yuki
Osaka-shi, Osaka 540-6207 (JP)**

(74) Representative: **Vigand, Philippe et al
Novagraaf International SA
Chemin de l'Echo 3
1213 Onex - Genève (CH)**

(54) **ELECTRODE FOR SECONDARY BATTERIES, SEPARATOR FOR SECONDARY BATTERIES, AND SECONDARY BATTERY**

(57)    A secondary battery according to one embodiment of the present invention is provided with a positive electrode, a negative electrode and a separator. The surface of the positive electrode, the negative electrode or the separator is provided with a protective layer that contains a resin component and inorganic particles that are formed of a metal compound. The inorganic particles contain at least one of 0.001-2% by mass of an alkali metal and 0.1-4% by mass of an alkaline earth metal.

Figure 2

**Description**

TECHNICAL FIELD

The present disclosure relates to an electrode for a secondary battery, a separator for a secondary battery, and a secondary battery.

BACKGROUND

Conventionally, a non-aqueous electrolyte secondary battery has been known in which a protective layer including inorganic particles such as aluminum oxide, silicon oxide, and titanium oxide is provided on the surface of a separator interposed between a positive electrode and a negative electrode (for example, refer to Patent Literature 1). Providing such a protective layer prevents, for example, a sudden exothermic reaction when a short circuit occurs due to nail sticking or crushing, and further improvement in safety is thus expected.

CITATION LIST

PATENT LITERATURE

PATENT LITERATURE 1: Japanese Unexamined Patent Application Publication No. 2013-16265

SUMMARY

In a secondary battery, improving the cycle characteristics is an important issue. The non-aqueous electrolyte secondary battery disclosed in Patent Literature 1 has room for improvement in cycle characteristics.
The electrode for a secondary battery according to the present disclosure is an electrode comprising a protective layer provided on the surface thereof, the protective layer including inorganic particles composed of a metal compound, and a resin component, wherein the inorganic particles contain at least one of 0.001 to 2% by mass of an alkali metal and 0.1 to 4% by mass of an alkaline earth metal.
The separator for a secondary battery according to the present disclosure is an electrode comprising a protective layer provided on the surface thereof, the protective layer including inorganic particles composed of a metal compound, and a resin component, wherein the inorganic particles contain at least one of 0.001 to 2% by mass of an alkali metal and 0.1 to 4% by mass of an alkaline earth metal.
The secondary battery according to the present disclosure is a secondary battery comprising a positive electrode, a negative electrode, and a separator, wherein a protective layer including inorganic particles composed of a metal compound, and a resin component is provided on the surface of the positive electrode, the negative electrode, or the separator, and the inorganic particles contain at least one of 0.001 to 2% by mass of an alkali metal and 0.1 to 4% by mass of an alkaline earth metal.
One aspect of the present disclosure can provide a secondary battery having excellent cycle characteristics. The secondary battery according to the present disclosure has a small degree of capacity deterioration due to charge-and-discharge.

BRIEF DESCRIPTION OF DRAWINGS

FIG. 1 is a sectional view of a secondary battery according to an example of the embodiment.

FIG. 2 is a sectional view of a positive electrode according to an example of the embodiment.

FIG. 3 is a sectional view of a separator according to an example of the embodiment.

DESCRIPTION OF EMBODIMENTS

As disclosed in Patent Literature 1, providing a protective layer including inorganic particles such as aluminum oxide on the surface of the positive electrode, the negative electrode, or the separator constituting the secondary battery can suppress, for example, heat generation when an abnormality occurs in the battery, but the result of the investigation by the present inventors has revealed that the cycle characteristics of the battery are deteriorated. Such a deterioration in cycle characteristics is considered to be partially due to the side reaction of the electrolyte on the surface of the inorganic particles. As a result of intensive investigations to solve this problem, the present inventors have found that the cycle characteristics are specifically improved by using the inorganic particles containing at least one of 0.001 to 2% by mass of an alkali metal and 0.1 to 4% by mass of an alkaline earth metal. The protective layer according to the present disclosure may be provided on the surface of the negative electrode, and is preferably provided on the surface of the positive electrode or the surface of the separator.

Hereinafter, an example of the embodiments of an electrode for a secondary battery, a separator for a secondary battery, and a secondary battery using at least one of these according to the present disclosure will be described in detail. Hereinafter, a cylindrical battery in which a wound electrode assembly 14 is housed in a bottomed cylindrical outer can 16 is exemplified, but the electrode assembly is not limited to the wound type and may be a laminate in which a plurality of positive electrodes and a plurality of negative electrodes are alternately laminated one by one via a separator. In addition, the secondary battery according to the present disclosure may be a rectangular battery comprising a rectangular metal case, a coin battery comprising a coin-shaped metal case, or the like, and a laminated battery comprising an outer housing being composed of a laminate sheet including a metal layer and a resin layer.

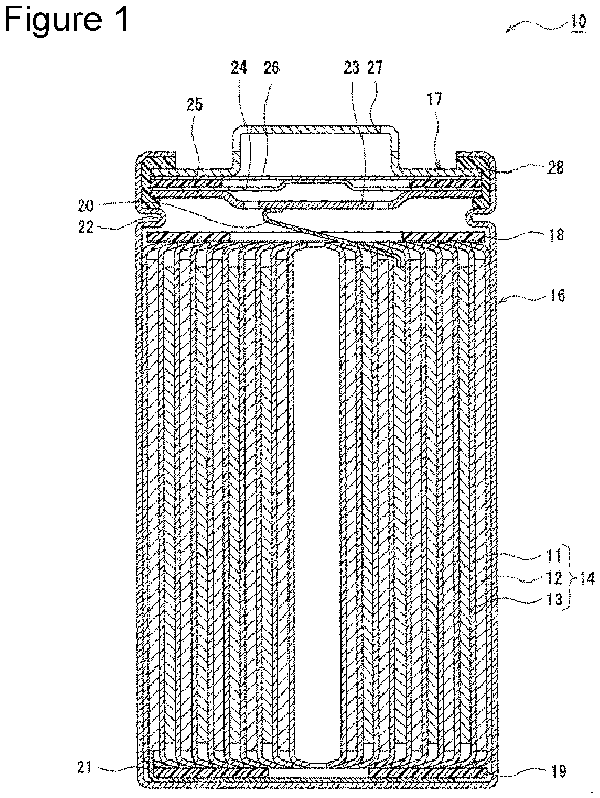

FIG. 1 is a sectional view of a secondary battery 10 according to an example of the embodiment. As illustrated in FIG. 1, the secondary battery 10 comprises the electrode assembly 14, an electrolyte, and the bottomed cylindrical outer can 16 that houses the electrode assembly 14 and the electrolyte. The electrode assembly 14 has a positive electrode 11, a negative electrode 12, and a separator 13, and has a wound structure in which the positive electrode 11 and the negative electrode 12 are wound via the separator 13. In addition, the secondary battery 10 comprises a sealing assembly 17 that closes the opening of the outer can 16. The secondary battery 10 may be a secondary battery using an aqueous electrolyte, or may be a secondary battery using a non-aqueous electrolyte. Hereinafter, the secondary battery 10 will be described as a non-aqueous electrolyte secondary battery such as a lithium ion battery using a non-aqueous electrolyte.

A non-aqueous electrolyte includes a non-aqueous solvent and an electrolyte salt dissolved in the non-aqueous solvent. For example, esters, ethers, nitriles, amides, and a mixed solvent of two or more thereof may be used as the non-aqueous solvent. The non-aqueous solvent may contain a halogen substitute such as a fluoroethylene carbonate in which at least a part of hydrogen of these solvents is substituted with a halogen atom such as fluorine. The non-aqueous electrolyte is not limited to a liquid electrolyte, and may be a solid electrolyte. A lithium salt such as $LiPF_6$ is used as the electrolyte salt.

The secondary battery 10 comprises insulating plates 18 and 19 arranged above and below the electrode assembly 14, respectively. In the example shown in FIG. 1, a positive electrode lead 20 attached to the positive electrode 11 extends to the side of the sealing assembly 17 through the through hole of the insulating plate 18, and a negative electrode lead 21 attached to the negative electrode 12 extends to the bottom side of the outer can 16 through the outside of the insulating plate 19. The positive electrode lead 20 is connected to the lower surface of an internal terminal board 23 of the sealing assembly 17, by welding or the like, and a cap 27, which is a top plate of the sealing assembly 17 electrically connected to the internal terminal board 23, serves as a positive electrode terminal. The negative electrode lead 21 is connected to the inner surface of bottom of the outer can 16 by welding or the like, and the outer can 16 serves as a negative electrode terminal.

The outer can 16 is a metal container with a bottomed cylindrical shape. A gasket 28 is provided between the outer can 16 and the sealing assembly 17 to ensure the sealability inside the battery and insulation of the outer can 16 and the sealing assembly 17. The top of the outer can 16 has a projecting portion 22 for supporting the sealing assembly 17, in which a part of the side surface of the outer can 16 protrudes inward. The projecting portion 22 is preferably formed in an annular shape along the circumferential direction of the outer can 16, and the sealing assembly 17 is supported on the upper surface thereof.

The sealing assembly 17 has a structure in which an internal terminal board 23, a lower vent member 24, an insulating member 25, an upper vent member 26, and a cap 27 are laminated in this order from the electrode assembly 14 side. Each member constituting the sealing assembly 17 has a disk shape or ring shape, for example, and each member except the insulating member 25 is electrically connected each other. The lower vent member 24 and the upper vent member 26 are connected together at their respective central portions, and the insulating member 25 is interposed between the respective peripheral portions. When the internal pressure of the battery rises due to abnormal heat generation, the lower vent member 24 is deformed and broken so as to push the upper vent member 26 toward the cap 27 side, and the current path between the lower vent member 24 and the upper vent member 26 is blocked. When the internal pressure further rises, the upper vent member 26 is broken and gas is discharged from the opening of the cap 27.

Hereinafter, the positive electrode 11, the negative electrode 12, and the separator 13 constituting the electrode assembly 14, particularly a positive layer provided on these surfaces will be described in detail. The protective layer is a layer including inorganic particles composed, as a main component, of a metal compound, and a resin component, and is provided to improve the safety of the battery.

[Positive Electrode]

The positive electrode 11 has a positive electrode core body and a positive electrode mixture layer provided on at least one surface of the positive electrode core body. A foil of a metal stable in the potential range of the positive electrode 11 such as aluminum or aluminum alloy, a film in which the metal is disposed on the surface, or the like can be used as the positive electrode core body. Preferably, the positive electrode mixture layer includes a positive electrode active material, a conductive agent, and a binder, and is formed on both sides of the positive electrode core body. The positive electrode 11 can be produced by applying a positive electrode mixture slurry including a positive electrode active material, a conductive agent, a binder, and the like onto the surface of the positive electrode core body, drying the coating film, and then rolling to form the positive electrode mixture layer on both sides of the core body.

A lithium transition metal composite oxide containing transition metal elements such as Co, Mn, and Ni is used as the positive electrode active material. Examples of the composite oxide include $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$, $Li_xMn_{2-y}M_yO_4$, $LiMPO_4$, and $Li_2MPO_4F$ (M: at least one of the group consisting of Na, Mg, Sc, Y, Mn, Fe, Co, Ni, Cu, Zn, Al, Cr, Pb, Sb, and B, $0 < x \leq 1.2$, $0 < y \leq 0.9$, $2.0 \leq z \leq 2.3$).

Examples of the conductive agent included in the positive electrode mixture layer include carbon materials such as carbon black (CB), acetylene black (AB), ketjen black, and graphite. Examples of the binder included in the positive electrode mixture layer include fluorine resins such as polytetrafluoroethylene (PTFE) and polyvinylidene fluoride (PVdF), polyacrylonitrile (PAN), polyimide resins, acrylic resins, and polyolefin resins. In addition, these resins may be used in combination with carboxymethylcellulose (CMC) or a salt thereof, or polyethylene oxide (PEO).

[Negative Electrode]

The negative electrode 12 has a negative electrode core body and a negative electrode mixture layer provided on at least one surface of the negative electrode core body. A foil of a metal stable in the potential range of the negative electrode 12 such as copper or copper alloy, a film in which the metal is disposed on the surface, or the like can be used as the negative electrode current collector. Preferably, the negative electrode mixture layer includes a negative electrode active material and a binder, and is formed on both sides of the negative electrode core body. The negative electrode 12 can be produced by applying a negative electrode mixture slurry including a negative electrode active material, a binder, and the like onto the negative electrode core body, drying the coating film, and then rolling to form the negative electrode mixture layer on both sides of the core body.

The negative electrode active material is not particularly limited as long as it can reversibly intercalate and deintercalate lithium ions, and a carbon material such as graphite is generally used. The graphite may be any of natural graphite such as flake graphite, lump graphite, and earth graphite and artificial graphite such as lump artificial graphite and graphitized mesophase carbon microbeads. In addition, as the negative electrode active material, metals such as Si and Sn that are alloyed with Li, metal compounds including Si and Sn, and lithium titanium composite oxides may be used.

As a binder included in the negative electrode mixture layer, fluorine-containing resin such as PTFE and PVdF, PAN, polyimide, acrylic resin, and polyolefins may be used as in the case of the positive electrode 11, but styrene-butadiene rubber (SBR) is preferably used. In addition, the negative electrode mixture layer may include CMC or a salt thereof, polyacrylic acid (PAA) or a salt thereof, PVA, or the like. The negative electrode mixture layer 41 includes, for example, SBR and CMC or a salt thereof.

[Separator]

As described above, the separator 13 is interposed between the positive electrode 11 and the negative electrode 12 to ensure the insulation between the positive electrode 11 and the negative electrode 12. As the separator 13, a porous sheet having ion permeability and insulating property is used. Specific examples of the porous sheet include a microporous thin film, a woven fabric, and a non-woven fabric. As the material of the separator 13, polyolefins such as polyethylene and polypropylene, cellulose, and the like are suitable. The separator 13 may have a single-layer structure or a laminated structure.

[Protective Layer]

As described above, the protective layer is provided on the surface of the positive electrode 11, the negative electrode 12, or the separator 13, and contributes to the improvement of battery safety. The protective layer is a porous layer in which the electrolyte permeates and does not hinder the movement of lithium ions between the positive and negative electrodes. The thickness of the protective layer is not particularly limited, and is preferably 1 μm to 10 μm or 1 μm to 5 μm. The protective layer is, for example, an insulating layer that includes no conductive agent. A protective layer 30 can be formed by applying a slurry including the constituent material of the protective layer 30 onto the surface of the positive electrode 11, the negative electrode 12, or the separator 13, and then drying the coating film.

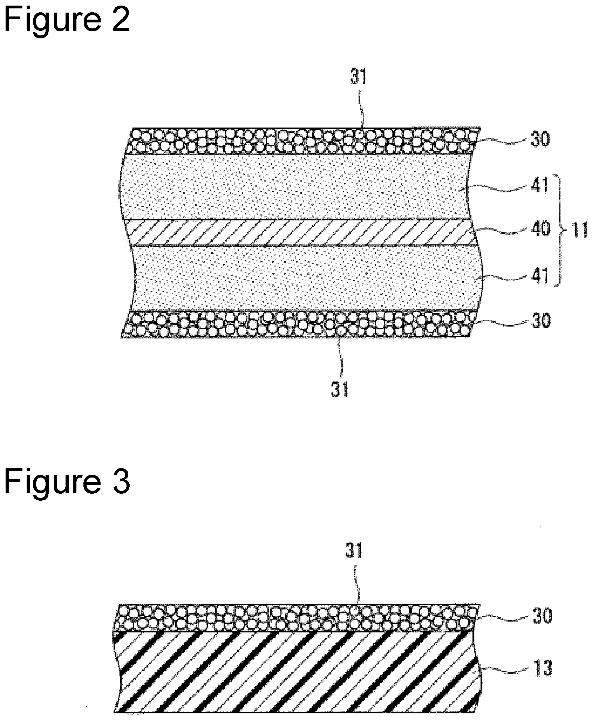

FIG. 2 shows the positive electrode 11 comprising the protective layer 30, and FIG. 3 shows the separator 13 comprising the protective layer 30. As illustrated in FIG. 2 and FIG. 3, the protective layer 30 is preferably provided on the surface of the positive electrode 11 or the separator 13 and is interposed between the positive electrode 11 and the separator 13. When the protective layer 30 is provided on the surface of the positive electrode 11, the protective layer 30 is provided on both sides of the positive electrode 11. The positive electrode 11 has a positive electrode core body 40 and a positive electrode mixture layer 41 provided on both sides of the positive electrode core body 40, and the protective layer 30 is provided on the surface of each of the positive electrode mixture layers 41. On the other hand, when the protective layer 30 is provided on the surface of the separator 13, the protective layer 30 may be provided on both sides of the separator 13, but is preferably provided only on the side facing the positive electrode 11 side.

The protective layer 30 includes inorganic particles 31 composed of a metal compound, and a resin component. The resin component binds the inorganic particles 31 to each other, and also binds the inorganic particles 31 to the surface of the positive electrode 11, the negative electrode 12, or the separator 13 to ensure the mechanical strength of the protective layer 30. The protective layer 30 is composed of the inorganic particles 31 as a main component. The main component means a component with the highest mass among the constituent materials of the protective layer 30. The content of the inorganic particles 31 is preferably 70 to 99% by mass, more preferably 80 to 98% by mass, and particularly preferably 90 to 97% by mass, with respect to the mass of the protective layer 30.

The protective layer 30 may be provided on a part of the surface of the positive electrode mixture layer 41, and is preferably provided on the entire surface of the positive electrode mixture layer 41. In addition, when the protective layer 30 is provided on the surface of the separator 13, the protective layer 30 is preferably provided on the one entire surface facing the positive electrode 11 side of the separator 13. Alternatively, the protective layer 30 may be provided on the entire surface of the negative electrode mixture layer. The protective layer 30 may include the inorganic particles 31 and a component other than the above resin component, as long as the object of the present disclosure is not impaired.

The inorganic particles 31 are particles of a metal compound and contain at least one of 0.001 to 2% by mass of the alkali metal and 0.1 to 4% by mass of the alkaline earth metal. In other words, the metal compound constituting the inorganic particles 31 contains at least one of 0.001 to 2% by mass of the alkali metal and 0.1 to 4% by mass of the alkaline earth metal. The cycle characteristics of the battery can be improved by using the inorganic particles 31 containing at least one of the alkali metal and the alkaline earth metal having the predetermined amounts described above. The inorganic particles 31 contain, for example, 0.001 to 2% by mass of the alkali metal and 0.1 to 4% by mass of the alkaline earth metal.

The inorganic particles 31 are composed of a metal compound including as a main component a metal other than the alkali metal and the alkaline earth metal. The metal compound constituting the inorganic particles 31 is preferably a metal compound having a lower oxidizing power than the lithium transition metal composite oxide used as a positive electrode active material. The metal compound contains at least one selected from the group consisting of, for example, Al, Si, Ti, and Mn as a metal element other than the alkali metal and the alkaline earth metal.

Specific examples of the metal compound constituting the inorganic particles 31 include titanium oxide (titania), aluminum oxide (alumina), silicon oxide (silica), manganese oxide, aluminum hydroxide, boehmite, and aluminum oxide hydrate represented by $Al_2O_3 \cdot nH_2O$ wherein n is 1 to 3. The metal compound is at least one selected from, for example, a metal oxide and a metal hydroxide. The inorganic particles 31 preferably include, as a metal compound, at least one selected from the group consisting of titanium oxide, aluminum oxide, aluminum hydroxide, boehmite, and aluminum oxide hydrate represented by $Al_2O_3 \cdot nH_2O$ wherein n is 1 to 3.

The content of the alkali metal in the inorganic particles 31 is 0.001 to 2% by mass, preferably 0.005 to 1.5% by mass, and more preferably 0.01 to 1% by mass, with respect to the mass of the inorganic particles 31. When the content of the alkali metal is less than 0.001% by mass, the effect of improving the cycle characteristics cannot be obtained, and it is hard to adjust the content. Also when the content of the alkali metal is more than 2% by mass, the effect of improving the cycle characteristics cannot be obtained. The preferable alkali metal is Na and K. One alkali metal may be added, or two or more alkali metals may be added to the inorganic particles 31.

The content of the alkaline earth metal in the inorganic particles 31 is 0.1 to 4% by mass, preferably 0.2 to 3% by mass, and more preferably 0.5 to 2% by mass, with respect to the mass of the inorganic particles 31. When the content of the alkali metal is less than 0.1% by mass or more than 4% by mass, the effect of improving the cycle characteristics cannot be obtained. The preferable alkaline earth metal is Mg, Ca, Sr, and Ba. One alkaline earth metal may be added, or two or more alkaline earth metals may be added to the inorganic particles 31.

The volume-based median diameter (D50) of the inorganic particles 31 is, for example, 0.05 $\mu$m to 2 $\mu$m, and is preferably 0.1 $\mu$m to 1 $\mu$m. The median diameter of the inorganic particles 31 is a particle size at which the volume integrated value is 50% in the particle size distribution measured by a laser diffraction scattering method. In addition, the aspect ratio of the inorganic particles 31 may be 2 or more. The protective layer 30 may include two or more inorganic particles 31 having different particle sizes, compositions, and the like.

The inorganic particles 31 are produced, for example, by immersing the particles of the metal compound containing a metal element such as Al, Si, Ti, and Mn into an aqueous solution of the alkali metal compound such as sodium hydroxide aqueous solution and potassium hydroxide aqueous solution, and then drying and firing the particles. In addition, when the alkaline earth metal is added to the inorganic particles 31, the inorganic particles 31 are produced by mixing the powder of an alkaline earth metal compound such as magnesium oxide and calcium oxide with the particles of a metal compound containing a metal element such as Al, Si, Ti, and Mn, and then firing the mixed particles. Firing is performed at a temperature of 1200 to 1600°C, for example, in the atmosphere.

The protective layer 30 includes at least one selected from the group consisting of, for example, acrylic resin, polyvinylidene fluoride, and hexafluoropropylene as a resin component. In addition, the protective layer 30 may include at least one selected from the group consisting of aramid resin, polyimide, and polyacrylonitrile, which have high heat resistance, as a resin component. The resin may be used singly or in combinations of two or more in the protective layer 30. The content of the resin component is preferably 0.1 to 10% by mass, and more preferably 1 to 5% by mass, with respect to the mass of the protective layer 30.

The protective layer 30 may include metal phosphorus oxide particles. Specific examples thereof include $Li_3PO_4$, LiPON, $Li_2HPO_4$, $LiH_2PO_4$, $Na_3PO_4$, $Na_2HPO_4$, $NaH_2PO_4$, $Zr_3(PO_4)_4$, $Zr(HPO_4)_2$, $HZr_2(PO_4)_3$, $K_3PO_4$, $K_2HPO_4$, $KH_2PO_4$, $Ca_3(PO_4)_2$, $CaHPO_4$, $Mg_3(PO_4)_2$, $MgHPO_4$, $LiCl-Li_5P_3O_{10}$, $LiCl-Li_7P_5O_{16}$, $LiCl-LiPO_3$, $LiCl-Li_2O-P_2O_5$, $Li_2O-P_2O_5$, $AgI-AgPO_3$, $CuI-CuPO_3$, $PbF_2-MnF_2-Al(PO_4)_3$, $AgI-Ag_2O-P_2O_5$, $AlPO_4$, and $Mn_3(PO_4)_2 \cdot 3H_2O$. Of these, at least one selected from the group consisting of lithium phosphate ($Li_3PO_4$ particles), dilithium hydrogen phosphate ($Li_2HPO_4$), aluminum phosphate ($AlPO_4$), and manganese phosphate hydrate ($Mn_3(PO_4)_2 \cdot 3H_2O$) is preferable.

The contents of the inorganic particles, the resin component, and the like in the protective layer 30 are determined by observing the cross section of the protective layer 30 with a scanning electron microscope (SEM) or a transmission electron microscope (TEM) and by element mapping.

The protective layer 30 can be formed by applying a slurry including the constituent material of the protective layer 30 onto the surface of, for example, the positive electrode mixture layer 41, and then drying the coating film. The protective layer slurry is applied in a conventionally known manner. The protective layer 30 is formed on the surface of the positive electrode mixture layer 41 at a surface density of, for example, $0.1 \text{ g/m}^2$ to $20 \text{ g/m}^2$. The dispersion medium of the protective layer slurry is not particularly limited as long as it is liquid that can be removed by volatilization, and can be changed appropriately depending on, for example, the type of a binder. The protective layer 30 can also be formed on the surface of the separator 13 or the surface of the negative electrode 12 in the same manner.

EXAMPLES

Hereinafter, the present disclosure will be further described with reference to examples, but the present disclosure is not limited to these examples.

<Example 1>

[Production of Positive Electrode]

A lithium transition metal composite oxide represented by $LiNi_{0.5}Co_{0.2}Mn_{0.3}O_2$ was used as a positive electrode active material. The positive electrode active material, acetylene black, and polyvinylidene fluoride (PVdF) were mixed in a solid content mass ratio of 97 : 2 : 1 to prepare a positive electrode mixture slurry with N-methyl-2-pyrrolidone (NMP) as a dispersion medium. Then, the slurry was applied onto both sides of the positive electrode core body consisting of aluminum foil, and the coating film was dried. Thereafter, the coating film was compressed and cut into a predetermined electrode size to provide a positive electrode in which the positive electrode mixture layer was formed on both sides of the core body.

[Production of Negative Electrode]

Graphite powder was used as a negative electrode active material. The negative electrode active material, sodium salt of carboxymethyl cellulose (CMC), and styrene-butadiene rubber (SBR) dispersion were mixed at a solid content mass ratio of 98.7 : 0.7 : 0.6 to prepare a negative electrode mixture slurry with water as a dispersion medium. Then, the negative electrode mixture slurry was applied onto both sides of the negative electrode core body consisting of copper foil, and the coating film was dried. Thereafter, the coating film was compressed and cut into a predetermined electrode size to provide a negative electrode in which the negative electrode mixture layer was formed on both sides of the core body.

[Production of Separator with Protective Layer]

Aluminum oxide ($Al_2O_3$) particles and sodium hydroxide (NaOH) were mixed and fired under a condition of 1500°C for 2 hours in the atmosphere, thereby producing $Al_2O_3$ particles containing 0.001% by mass of Na with respect to the total mass of the particles. Thereafter, 95 parts by mass of the $Al_2O_3$ particles and 5 parts by mass of acrylic resin were mixed to prepare a protective layer slurry with NMP as a dispersion medium. The slurry was applied onto one side of a polyethylene separator and the coating film was dried to provide a separator having a protective layer formed on one side. The Na content of $Al_2O_3$ particles was measured by ICP emission spectrometry.

[Preparation of Non-Aqueous Electrolyte]

Ethylene carbonate (EC), ethyl methyl carbonate (EMC), and dimethyl carbonate (DMC) were mixed in a volume ratio of 3 : 3 : 4. $LiPF_6$ was dissolved in the mixed solvent so as to obtain a concentration of 1.2 mol/L to prepare a non-aqueous electrolyte.

[Production of Battery]

Aluminum lead was attached to the positive electrode and nickel lead was attached to the negative electrode, and the positive electrode and the negative electrode were spirally wound via the separator to produce a wound electrode assembly. In this case, the separator was arranged such that the surface on which the protective layer of the separator was formed faced the positive electrode side. The electrode assembly was housed in a bottomed cylindrical outer can having an outer diameter of 18.2 mm and a height of 65 mm, the non-aqueous electrolyte was injected therein, and then the opening of the outer can was sealed with a gasket and a sealing assembly to provide a cylindrical non-aqueous electrolyte secondary battery.

[Evaluation of Capacity Retention (Cycle Characteristics)]

The above secondary battery was charged and discharged under the following conditions in a temperature environment of 25°C, and the capacity retention after 200 cycles was determined.
Charge: charging was performed to a battery voltage of 4.2 V with a constant current of 0.3 C, and then charging was performed to a current value of 0.02 C with a constant voltage of 4.2 V.
Discharge: discharge was performed to a battery voltage of 2.5 V with a constant current of 0.5 C.

$$\text{Capacity retention } (\%) = (\text{discharge capacity at cycle 200 / discharge capacity at cycle 1}) \times 100$$

<Example 2>

A separator and a secondary battery were produced in the same manner as in Example 1 except that the mixing ratio of NaOH was changed and the Na content of $Al_2O_3$ particles was changed to 0.02% by mass in preparation of the protective layer slurry, and the cycle characteristics were evaluated.

<Example 3>

A separator and a secondary battery were produced in the same manner as in Example 1 except that magnesium hydroxide (Mg(OH)2) was mixed instead of NaOH and fired under a condition of 1500°C for 2 hours in the atmosphere in preparation of the protective layer slurry to produce $Al_2O_3$ particles containing 0.5% by mass of Mg with respect to the total mass of the particles, and the cycle characteristics were evaluated.

<Example 4>

A separator and a secondary battery were produced in the same manner as in Example 1 except that NaOH and Mg(OH)2 were mixed and fired under a condition of 1500°C for 2 hours in the atmosphere in preparation of the protective layer slurry to produce $Al_2O_3$ particles containing 0.02% by mass of Na and 0.5% by mass of Mg with respect to the total mass of the particles, and the cycle characteristics were evaluated.

<Example 5>

A separator and a secondary battery were produced in the same manner as in Example 4 except that the Na content and the Mg content of $Al_2O_3$ particles were 1% by mass and 3% by mass, respectively, in preparation of the protective layer slurry, and the cycle characteristics were evaluated.

<Example 6>

A separator and a secondary battery were produced in the same manner as in Example 1 except that potassium hydroxide (KOH) and calcium hydroxide (Ca(OH)2) were mixed and fired under a condition of 1500°C for 2 hours in the atmosphere in preparation of the protective layer slurry to produce $Al_2O_3$ particles containing 1% by mass of K and 4% by mass of Ca with respect to the total mass of the particles, and the cycle characteristics were evaluated.

<Example 7>

A separator and a secondary battery were produced in the same manner as in Example 4 except that boehmite (AlOOH) particles were used instead of $Al_2O_3$ particles in the preparation of the protective layer slurry, and the cycle characteristics were evaluated.

<Example 8>

A separator and a secondary battery were produced in the same manner as in Example 4 except that aluminum hydroxide (Al(OH)3) particles were used instead of AlOOH particles in preparation of the protective layer slurry, and the cycle characteristics were evaluated.

<Comparative Example 1>

A separator and a secondary battery were produced in the same manner as in Example 1 except that $Al_2O_3$ particles were used without adding an alkali metal and an alkaline earth metal in the preparation of the protective layer slurry, and the cycle characteristics were evaluated.

<Comparative Example 2>

A separator and a secondary battery were produced in the same manner as in Example 5 except that the Mg content of $Al_2O_3$ particles was 5% by mass in preparation of the protective layer slurry, and the cycle characteristics were evaluated.

<Example 9>

A separator and a secondary battery were produced in the same manner as in Example 2 except that titanium oxide ($TiO_2$) particles were used instead of $Al_2O_3$ particles and the Na content was 0.1% by mass in preparation of the protective layer slurry, and the cycle characteristics were evaluated.

<Example 10>

A separator and a secondary battery were produced in the same manner as in Example 3 except that $TiO_2$ particles were used instead of $Al_2O_3$ particles in the preparation of the protective layer slurry, and the cycle characteristics were evaluated.

<Example 11>

A separator and a secondary battery were produced in the same manner as in Example 4 except that $TiO_2$ particles were used instead of $Al_2O_3$ particles, and the Na content was 0.1% by mass and the Mg content was 0.5% by mass with respect to the total mass of particles in preparation of the protective layer slurry, and the cycle characteristics were evaluated.

<Comparative Example 3>

A separator and a secondary battery were produced in the same manner as in Example 1 except that $TiO_2$ particles were used without adding an alkali metal and an alkaline earth metal in the preparation of the protective layer slurry, and the cycle characteristics were evaluated.

[Table 1]

| | Inorganic particles | | | | | Capacity retention (%) |
|---|---|---|---|---|---|---|
| | Main component | Alkali metal | | Alkaline earth metal | | |
| | | Na | K | Mg | Ca | |
| Example 1 | $Al_2O_3$ | 0.001% | | | | 91 |
| Example 2 | $Al_2O_3$ | 0.02% | | | | 92 |
| Example 3 | $Al_2O_3$ | | | 0.5% | | 92 |
| Example 4 | $Al_2O_3$ | 0.02% | | 0.5% | | 94 |
| Example 5 | $Al_2O_3$ | 1% | | 3% | | 94 |
| Example 6 | $Al_2O_3$ | | 1% | | 4% | 93 |
| Example 7 | AlOOH | 0.02% | | 0.5% | | 93 |
| Example 8 | $Al(OH)_3$ | 0.02% | | 0.5% | | 93 |
| Comparative Example 1 | $Al_2O_3$ | | | | | 86 |
| Comparative Example 2 | $Al_2O_3$ | 1% | | 5% | | 88 |
| Example 9 | $TiO_2$ | 0.1% | | | | 91 |
| Example 10 | $TiO_2$ | | | 0.5% | | 92 |
| Example 11 | $TiO_2$ | 0.1% | | 0.5% | | 93 |
| Comparative Example 3 | $TiO_2$ | | | | | 86 |

As shown in Table 1, all of the batteries in the Examples have higher capacity retention after the cycle test than the batteries in the Comparative Examples and thus have excellent cycle characteristics. The particles containing no alkali metal or alkaline earth metal (Comparative Examples 1 and 3) and the particles containing 5% by mass of an alkaline earth metal (Comparative Example 2) as inorganic particles constituting the protective layer resulted in giving a value of the capacity retention of less than 90%. That is, the cycle characteristics are specifically improved only by using the inorganic particles containing at least one of 0.001 to 2% by mass of an alkali metal and 0.1 to 4% by mass of an alkaline earth metal.

REFERENCE SIGNS LIST

| | |
|---|---|
| 10 | secondary battery |
| 11 | positive electrode |
| 12 | negative electrode |
| 13 | separator |
| 14 | electrode assembly |
| 16 | outer can |
| 17 | sealing assembly |
| 18, 19 | insulating plate |
| 20 | positive electrode lead |
| 21 | negative electrode lead |
| 22 | projecting portion |
| 23 | Internal terminal board |

| 24 | lower vent member |
|----|----|
| 25 | insulating member |
| 26 | upper vent member |
| 27 | cap |
| 28 | gasket |
| 30 | protective layer |
| 31 | inorganic particles |
| 40 | positive electrode core body |
| 41 | positive electrode mixture layer |

**Claims**

1. An electrode for a secondary battery, comprising:

   a protective layer provided on a surface thereof, the protective layer including inorganic particles composed of a metal compound, and a resin component,
   wherein the inorganic particles contain at least one of 0.001 to 2% by mass of an alkali metal and 0.1 to 4% by mass of an alkaline earth metal.

2. The electrode for a secondary battery according to claim 1, wherein the inorganic particles contain 0.001 to 2% by mass of an alkali metal and 0.1 to 4% by mass of an alkaline earth metal.

3. The electrode for a secondary battery according to claim 1 or 2, wherein the inorganic particles include, as the metal compound, at least one selected from the group consisting of titanium oxide, aluminum oxide, aluminum hydroxide, boehmite, and aluminum oxide hydrate represented by $Al_2O_3 \cdot nH_2O$ wherein n is 1 to 3.

4. The electrode for a secondary battery according to any one of claims 1 to 3, wherein the protective layer includes at least one selected from the group consisting of acrylic resin, polyvinylidene fluoride, and hexafluoropropylene as the resin component.

5. The electrode for a secondary battery according to any one of claims 1 to 3, wherein the protective layer includes at least one selected from the group consisting of aramid resin, polyimide, and polyacrylonitrile as the resin component.

6. A separator for a secondary battery, comprising:

   a protective layer provided on a surface thereof, the protective layer including inorganic particles composed of a metal compound, and a resin component,
   wherein the inorganic particles contain at least one of 0.001 to 2% by mass of an alkali metal and 0.1 to 4% by mass of an alkaline earth metal.

7. The separator for a secondary battery according to claim 6, wherein the inorganic particles contain 0.001 to 2% by mass of an alkali metal and 0.1 to 4% by mass of an alkaline earth metal.

8. The separator for a secondary battery according to claim 6 or 7, wherein the inorganic particles include, as the metal compound, at least one selected from the group consisting of titanium oxide, aluminum oxide, aluminum hydroxide, boehmite, and aluminum oxide hydrate represented by $Al_2O_3 \cdot nH_2O$ wherein n is 1 to 3.

9. The separator for a secondary battery according to any one of claims 6 to 8, wherein the protective layer includes at least one selected from the group consisting of acrylic resin, polyvinylidene fluoride, and hexafluoropropylene as the resin component.

10. The separator for a secondary battery according to any one of claims 6 to 8, wherein the protective layer includes at least one selected from the group consisting of aramid resin, polyimide, and polyacrylonitrile as the resin component.

11. A secondary battery, comprising:

a positive electrode;
a negative electrode; and
a separator,
wherein a protective layer including inorganic particles composed of a metal compound, and a resin component is provided on a surface of the positive electrode, the negative electrode, or the separator, and the inorganic particles contain at least one of 0.001 to 2% by mass of an alkali metal and 0.1 to 4% by mass of an alkaline earth metal.

12. The secondary battery according to claim 11, wherein the inorganic particles contain 0.001 to 2% by mass of an alkali metal and 0.1 to 4% by mass of an alkaline earth metal.

13. The secondary battery according to claim 11 or 12, wherein the inorganic particles include, as the metal compound, at least one selected from the group consisting of titanium oxide, aluminum oxide, aluminum hydroxide, boehmite, and aluminum oxide hydrate represented by $Al_2O_3 \cdot nH_2O$ wherein n is 1 to 3.

14. The secondary battery according to any one of claims 11 to 13, wherein the protective layer includes at least one selected from the group consisting of acrylic resin, polyvinylidene fluoride, and hexafluoropropylene as the resin component.

15. The secondary battery according to any one of claims 11 to 13, wherein the protective layer includes at least one selected from the group consisting of aramid resin, polyimide, and polyacrylonitrile as the resin component.

16. The secondary battery according to any one of claims 11 to 15, wherein the protective layer is provided on a surface of the positive electrode or the separator and is interposed between the positive electrode and the separator.

# Figure 1

Figure 2

Figure 3

# INTERNATIONAL SEARCH REPORT

| | International application No. |
|---|---|
| | PCT/JP2020/017626 |

**A. CLASSIFICATION OF SUBJECT MATTER**
Int. Cl. H01M4/13(2010.01)i, B32B15/08(2006.01)i, B32B15/082(2006.01)i, B32B15/088(2006.01)i, H01M2/16(2006.01)i, H01M4/02(2006.01)i, H01M10/04(2006.01)i, H01M10/058(2010.01)i
FI: H01M4/13, B32B15/08 E, B32B15/082 B, B32B15/082 Z, B32B15/088, H01M2/16 L, H01M2/16 M, H01M2/16 P, H01M4/02 Z, H01M10/04 Z, H01M10/058

According to International Patent Classification (IPC) or to both national classification and IPC

**B. FIELDS SEARCHED**

Minimum documentation searched (classification system followed by classification symbols)
Int. Cl. H01M4/13, B32B15/08, B32B15/082, B32B15/088, H01M2/16, H01M4/02, H01M10/04, H01M10/058

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/088004 A1 (SUMITOMO CHEMICAL CO., LTD.) 17 May 2018, paragraphs [0079], [0085], [0086], examples 1-16, comparative example 1 | 1-16 |
| Y | | 4-5, 9-10, 14-15 |
| X | JP 2015-41502 A (KYORITSU CHEMICAL & CO., LTD.) 02 March 2015, paragraphs [0015], [0016], [0031]-[0034], [0123], [0124], examples 1-16, comparative examples 1-4 | 1-16 |
| Y | | 4-5, 9-10, 14-15 |
| X | WO 2009/151054 A1 (HITACHI MAXELL, LTD.) 17 December 2009, paragraphs [0020], [0021], [0066], [0084], [0085], [0090], [0092], examples 1-6, comparative examples 1-3 | 1, 3, 6, 8, 11, 13, 16 |
| Y | | 4-5, 9-10, 14-15 |

☒ Further documents are listed in the continuation of Box C.  ☒ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20.07.2020 | 28.07.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

| INTERNATIONAL SEARCH REPORT | International application No. |
|---|---|
| | PCT/JP2020/017626 |

C (Continuation).   DOCUMENTS CONSIDERED TO BE RELEVANT

| Category* | Citation of document, with indication, where appropriate, of the relevant passages | Relevant to claim No. |
|---|---|---|
| P, A | WO 2020/059450 A1 (PANASONIC INTELLECTUAL PROPERTY MANAGEMENT CO., LTD.) 26 March 2020 | 1-16 |

Form PCT/ISA/210 (continuation of second sheet) (January 2015)

INTERNATIONAL SEARCH REPORT
Information on patent family members

International application No.

PCT/JP2020/017626

| Patent Documents referred to in the Report | Publication Date | Patent Family | Publication Date |
|---|---|---|---|
| WO 2018/088004 A1 | 17.05.2018 | US 2019/0031522 A1 paragraphs [0097], [0098], [0104], [0105], examples 1-16, comparative example 1 EP 3401282 A1 CN 108602685 A KR 10-2018-0066893 A | |
| JP 2015-41502 A | 02.03.2015 | (Family: none) | |
| WO 2009/151054 A1 | 17.12.2009 | US 2011/0039145 A1 paragraphs [0024], [0025], [0070], [0089]-[0091], [0096], [0097], [0099], examples 1-6, comparative examples 1-3 CN 102057518 A KR 10-2010-0135955 A | |
| WO 2020/059450 A1 | 26.03.2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013016265 A